# EUROPÄISCHE PATENTSCHRIFT

(11) **EP 3 569 049 B1**
(45) Veröffentlichungstag und Bekanntmachung des Hinweises auf die Patenterteilung: **10.08.2022**
(21) Anmeldenummer: 19161482.5
(22) Anmeldetag: 08.03.2019
(51) Int. Cl.: A01D 41/14

(54) **LANDWIRTSCHAFTLICHE ARBEITSMASCHINE**
AGRICULTURAL MACHINE
ENGIN DE TRAVAIL AGRICOLE

(30) Priorität: 16.05.2018 DE 102018111746
(43) Veröffentlichungstag der Anmeldung: 20.11.2019
(73) Patentinhaber: CLAAS Selbstfahrende Erntemaschinen GmbH, 33428 Harsewinkel (DE)
(72) Erfinder: Beschorn, Udo, 33428 Harsewinkel (DE); Middelberg, René, 49080 Osnabrück (DE); Roters, Mark, 48155 Münster (DE); Wielenberg, Andreas, 32049 Herford (DE)
(74) Vertreter: CLAAS Gruppe

(56) Entgegenhaltungen:
- EP-A1- 1 374 661
- DE-A1- 3 230 330
- US-A1- 2008 155 954
- US-A1- 2010 287 898
- US-A1- 2012 174 549

## Beschreibung

Die vorliegende Erfindung betrifft eine landwirtschaftliche Arbeitsmaschine, insbesondere Erntemaschine, gemäß dem Oberbegriff von Anspruch 1.

Landwirtschaftliche Arbeitsmaschinen, zu denen insbesondere selbstfahrende Erntemaschinen wie Mähdrescher und Feldhäcksler zählen, weisen regelmäßig verschiedene Arbeitsorgane zur Durchführung oder Unterstützung landwirtschaftlicher Arbeit auf. Beispiele für Arbeitsorgane eines Mähdreschers sind u.a. das Schneidwerk, das dem Schneidwerk nachgeschaltete Dreschwerk und die dem Dreschwerk nachgeschalteten Trenn- und Reinigungseinrichtungen. Das Schneidwerk ist üblicherweise als Vorsatzgerät ausgebildet, also als ein Arbeitsorgan, das in Fahrtrichtung vorne am Mähdrescher angeordnet ist. Entsprechende Vorsatzgeräte in Form eines Schneidwerks sind auch bei Feldhäckslern bekannt. Lediglich beispielhaft sei hier das sogenannte Maisgebiss genannt.

Allgemein bekannt sind bei landwirtschaftlichen Arbeitsmaschinen auch Autokontursysteme, deren Aufgabe es ganz allgemein ist, ein Vorsatzgerät in einem ganz bestimmten Abstand über dem Boden durch den Feldbestand zu führen. Ein solches Autokontursystem ist beispielsweise in der EP 1 374 661 B1 beschrieben. Das bekannte Autokontursystem weist eine Bodenabtasteinrichtung auf, die den Boden in Fahrtrichtung vor der landwirtschaftlichen Arbeitsmaschine an mindestens zwei in Fahrtrichtung voneinander beabstandeten Stellen berührend, beispielsweise mittels eines Tastbügels, und/oder berührungslos, beispielsweise mittels eines optischen Systems, abtastet. Durch die Abtastung kann ein Höhenunterschied in Fahrtrichtung und somit eine Neigung des Bodens detektiert werden. Basierend auf dem ermittelten Höhenunterschied regelt das Autokontursystem dann den Abstand des Vorsatzgeräts zum Boden. Neben dieser Regelung der Höhenlage des Vorsatzgeräts kann auch die Querlage, d.h. die Neigung des Vorsatzgeräts quer zur Fahrtrichtung, geregelt werden, indem mehrere solcher Bodenabtasteinrichtungen über die Arbeitsbreite des Vorsatzgeräts vorgesehen sind. Auf diese Weise soll eine gleichmäßige Schnitthöhe insbesondere bei wechselnden Bodenverläufen eingehalten werden.

Allerdings stellt die Abstimmung der für die Empfindlichkeit der Regelung der Höhenlage und der Querlage relevanten Parameter (Verstärkungen, Filterzeitkonstanten etc.) immer einen Kompromiss dar. Einerseits müssen diese Parameter so eingestellt werden, dass die Höhenlage und die Querlage ausreichend schnell an die Bodenkontur angepasst werden. Andererseits darf die Empfindlichkeit der Regelung des Autokontursystems bzw. dessen Reaktionsgeschwindigkeit nicht so hoch sein, dass kleinere Bodenunebenheiten wie Fahrspuren, Wildschäden etc. eine zu starke Verstellung des Vorsatzgeräts hervorrufen. Beispielsweise kann bei Fahrten quer oder diagonal zur Saatrichtung oder zu den Fahrspuren, wie sie z.B. am Vorgewende auftreten, das System teilweise so stark reagieren, dass es zu in der Kabine spürbaren Schlägen oder zum Schwingen des Vorsatzgeräts kommt. Ein solches Schlagen wiederum verschlechtert den Komfort für den Fahrer. Ein Schwingen des Vorsatzgeräts kann außerdem zu einer Verschlechterung des Schnittbilds führen.

Der Erfindung liegt das Problem zugrunde, eine landwirtschaftliche Arbeitsmaschine derart auszugestalten und weiterzubilden, dass während des Betriebs beim Durchfahren des Feldbestands der Komfort erhöht wird.

Das obige Problem wird bei einer landwirtschaftlichen Arbeitsmaschine gemäß dem Oberbegriff von Anspruch 1 durch die Merkmale des kennzeichnenden Teils von Anspruch 1 gelöst.

Wesentlich ist die grundsätzliche Überlegung, dass beim Durchfahren des Feldbestands Änderungen der Bestandshöhe vor der landwirtschaftlichen Arbeitsmaschine erkannt werden und abhängig davon, ob eine vergleichsweise große Änderung oder eine vergleichsweise kleine bzw. überhaupt keine Änderung der Bestandshöhe ermittelt wird, die Regelungsempfindlichkeit des Autokontursystems entsprechend eingestellt werden. Dazu kann das Autokontursystem an mehreren in Fahrtrichtung voneinander beabstandeten Stellen vor der landwirtschaftlichen Arbeitsmaschine jeweils eine Bestandshöhenmessung durchführen und anhand der Messergebnisse ermitteln, ob sich das Gelände bei der Weiterfahrt demnächst insgesamt in eine bestimmte Richtung neigt, beispielsweise aufgrund einer größeren Senke im weiteren Verlauf der Fahrstrecke abfällt oder aufgrund eines größeren Hügels im weiteren Verlauf der Fahrstrecke ansteigt, oder ob das Gelände in Fahrtrichtung im Wesentlichen eben ist. Werden vergleichsweise große Bestandshöhenänderungen detektiert, kann das Autokontursystem daraus schließen, dass sich in Fahrtrichtung vor der landwirtschaftlichen Arbeitsmaschine die Geländeneigung ändern wird. Werden dagegen nur kleine Bestandshöhenänderungen oder überhaupt keine Bestandshöhenänderungen detektiert, ist auf ein im Wesentlichen ebenes Gelände zu schließen.

Schließt das Autokontursystem nun aufgrund der detektierten Bestandshöhenänderung auf eine bevorstehende Änderung der Geländeneigung, wird die Empfindlichkeit der Regelung des Autokontursystems erhöht, so dass bei Erreichen der Stelle, an der sich die Geländeneigung ändert, auf einen dann zwangsläufig auftretenden Höhenunterschied im Boden eine möglichst schnelle Anpassung des Abstands des Vorsatzgeräts zum Boden erfolgt. Wird dagegen von dem Autokontursystem keine oder nur eine geringe Bestandshöhenänderung detektiert und entsprechend auf ein flaches Gelände ohne eine bevorstehende Neigungsänderung geschlossen, wird für die Empfindlichkeit der Regelung des Autokontursystems eine vergleichsweise geringe Empfindlichkeit eingestellt, wodurch das Autokontursystem bei dann ermittelten Höhenunterschieden im Boden, die dann auf kleinere Bodenunebenheiten zurückzuführen sind, vergleichsweise träge reagiert. Ein starkes Reagieren und dadurch Schlagen oder Schwingen des Vorsatzgeräts aufgrund von kleineren Bodenunebenheiten kann auf diese Weise vermieden werden.

Vorschlagsgemäß ist nun vorgesehen, dass das Autokontursystem vorausschauend eine detektierte Bestandshöhenänderung des Feldbestands berücksichtigt und basierend auf der detektierten Bestandshöhenänderung die Empfindlichkeit der Regelung des Autokontursystems anpasst. Die Empfindlichkeit wird insbesondere dadurch angepasst, dass Parameter der Regelung, die die Empfindlichkeit beeinflussen, verändert werden. Lediglich beispielhaft seien hier Verstärkungen, Filterzeitkonstanten etc. genannt. Das Autokontursystem kann auf diese Weise kleinere Bodenunebenheiten herausfiltern und nur bei vergleichsweise großen Änderungen der Geländeneigung die gewünschte schnelle Anpassung des Abstands des Vorsatzgeräts zum Boden durchführen.

Nach der Ausgestaltung gemäß Anspruch 2 wird die detektierte Bestandshöhenänderung mit einem vorgegebenen und insbesondere gespeicherten Sollwert für die Bestandshöhenänderung verglichen. Die detektierte Bestandshöhenänderung kann auch eine gemittelte Bestandshöhenänderung sein, die über eine vorgegebene Strecke ermittelt wird (Anspruch 3). Auf diese Weise können vergleichsweise große Bestandshöhenänderungen, die nämlich den Sollwert überschreiten, von vergleichsweise kleinen Bestandshöhenänderungen unterschieden werden. Eine große Bestandshöhenänderung deutet dann darauf hin, dass sich die Geländeneigung im weiteren Verlauf der Fahrstrecke ändern wird und an der Stelle bzw. zum Zeitpunkt der Neigungsänderung eine höhere Regelungsempfindlichkeit eingestellt sein muss (Anspruch 4).

Nach der Ausgestaltung gemäß Anspruch 5 wird die Empfindlichkeit nur für eine vorgegebene Strecke und/oder Zeitspanne, also nur vorübergehend, erhöht und anschließend wieder verringert. Eine erhöhte Empfindlichkeit wird insbesondere nur für die Strecke und/oder Zeitspanne eingestellt, die die landwirtschaftliche Arbeitsmaschine zurücklegt bzw. benötigt, um die Stelle, an der sich die Geländeneigung ändert, zu passieren, insbesondere vollständig zu passieren. In diesem Strecken- und/oder Zeitabschnitt sollte der Abstand des Vorsatzgeräts zum Boden möglichst schnell angepasst werden. Spätestens nachdem die Stelle, an der sich die Geländeneigung ändert, überwunden worden ist, sollte die Empfindlichkeit des Autokontursystems dann wieder verringert werden, so dass das Autokontursystem dann wieder so träge reagiert, dass kleinere Bodenunebenheiten keine starken Verstellungen des Vorsatzgeräts verursachen können.

Die Ansprüche 6 bis 8 geben verschiedene Möglichkeiten an, die Strecke, über die die Empfindlichkeit der Regelung des Autokontursystems erhöht bleiben soll, zu definieren.

Nach der Ausgestaltung gemäß Anspruch 9 kann die Empfindlichkeit der Regelung des Autokontursystems im einfachsten Fall zwischen zwei Werten eingestellt werden, nämlich einem ersten, vergleichsweise niedrigen Wert und einem im Vergleich dazu höheren Wert. Grundsätzlich können aber auch Zwischenwerte vorgesehen sein, auf die sich die Empfindlichkeit basierend auf der detektierten Bestandshöhenänderung einstellen lassen kann.

Erfindungsgemäß ist eine Detektionseinrichtung der landwirtschaftlichen Arbeitsmaschine definiert, die den Feldbestand in Fahrtrichtung vor der landwirtschaftlichen Arbeitsmaschine erfassen kann. Mit einer Detektionseinrichtung lässt sich die Bestandshöhe, also die absolute Höhe des Ernteguts vom Boden bis zu den Pflanzenspitzen, oder eine Bestands-Höhenkontur des Feldbestands erkennen. In letzterem Fall wird dann nicht die Pflanzenhöhe bestimmt, sondern es werden lediglich Höhenunterschiede zwischen den Pflanzenspitzen, die die Bestands-Höhenkontur bilden, ermittelt.

Nach einer weiteren Ausgestaltung weist das Autokontursystem eine Bodenabtasteinrichtung auf, die den Boden vor der landwirtschaftlichen Arbeitsmaschine und/oder unter dem Vorsatzgerät abtastet und dadurch Höhenunterschiede im Boden ermitteln kann. Abhängig davon, welche Empfindlichkeit für das Autokontursystem zum Zeitpunkt eines ermittelten Höhenunterschieds im Boden eingestellt ist, wird dann vom Autokontursystem der Abstand des Vorsatzgeräts zum Boden entweder schnell verstellt, nämlich bei einer größeren Neigungsänderung des Geländes, oder das Autokontursystem reagiert träge, nämlich bei lediglich kleineren Bodenunebenheiten.

Nach einer weiteren Ausgestaltung gemäß Anspruch 14 kann das Autokontursystem mit der jeweils eingestellten Empfindlichkeit die Höhenlage des Vorsatzgeräts, also den über die Arbeitsbreite des Vorsatzgeräts mittleren Abstand zum Boden, und/oder die Querlage, also die Neigung des Vorsatzgeräts quer zur Fahrtrichtung, relativ zum Boden regeln.

Im Folgenden wird die Erfindung anhand einer lediglich Ausführungsbeispiele darstellenden Zeichnung näher erläutert. In der Zeichnung zeigt:
- Fig. 1: eine schematische Ansicht einer vorschlagsgemäßen landwirtschaftlichen Arbeitsmaschine in Form eines Mähdreschers beim Durchfahren eines ebenen Geländes,
- Fig. 2a: die landwirtschaftliche Arbeitsmaschine gemäß Fig. 1 beim Durchfahren eines Geländes, dessen Neigung sich im weiteren Verlauf verringert, und
- Fig. 2b: die landwirtschaftliche Arbeitsmaschine gemäß Fig. 1 beim Durchfahren eines Geländes, dessen Neigung sich im weiteren Verlauf erhöht.

Die vorschlagsgemäße Lösung lässt sich auf einen weiten Bereich selbstfahrender landwirtschaftlicher Arbeitsmaschinen, insbesondere auf Erntemaschinen, anwenden. Dazu gehören Mähdrescher, Feldhäcksler, Zugmaschinen, insbesondere Traktoren, oder dergleichen. Bei dem dargestellten und insoweit bevorzugten Ausführungsbeispiel handelt es sich bei der landwirtschaftlichen Arbeitsmaschine 1 um einen Mähdrescher, der in an sich üblicher Weise mit einem Vorsatzgerät 2 ausgestattet ist, das zur Durchführung oder Unterstützung landwirtschaftlicher Arbeit in einem Feldbestand 3 dient. Alle Ausführungen zu einem Mähdrescher gelten für alle anderen Arten von landwirtschaftlichen Arbeitsmaschinen entsprechend. Die landwirtschaftliche Arbeitsmaschine 1 dient der Abarbeitung eines landwirtschaftlichen Arbeitsprozesses, beispielsweise der Ernte von Erntegut 4 aus dem Feldbestand 3. Für den Fall, dass es sich wie im dargestellten Ausführungsbeispiel bei der landwirtschaftlichen Arbeitsmaschine 1 um einen Mähdrescher handelt, läuft während der Abarbeitung des landwirtschaftlichen Arbeitsprozesses in der Arbeitsmaschine 1 ein Erntegut-Verarbeitungsprozess, der einen Dreschprozess, einen Abscheideprozess, einen Reinigungsprozess und einen Verteilprozess beinhaltet.

Die vorschlagsgemäße landwirtschaftliche Arbeitsmaschine 1 ist mit mehreren Arbeitsorganen 5 bis 10 ausgestattet. Eine als Mähdrescher ausgestaltete landwirtschaftliche Arbeitsmaschine 1 weist zur Durchführung des genannten Erntegut-Verarbeitungsprozesses vorzugsweise als Arbeitsorgane einen Fahrantrieb 5, ein Schneidwerk 6, ein Dreschwerk 7, eine Abscheidevorrichtung 8, eine Reinigungsvorrichtung 9 und eine Verteilvorrichtung 10 auf. Das Vorsatzgerät 2 bildet hier und vorzugsweise das Schneidwerk 6.

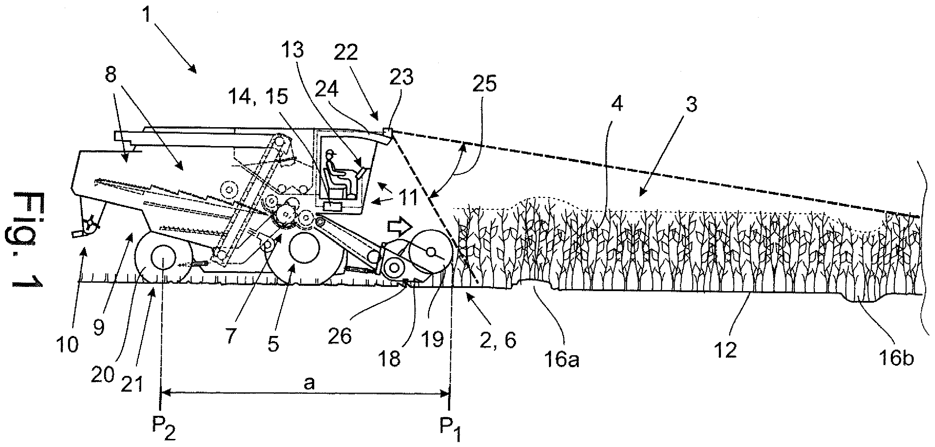

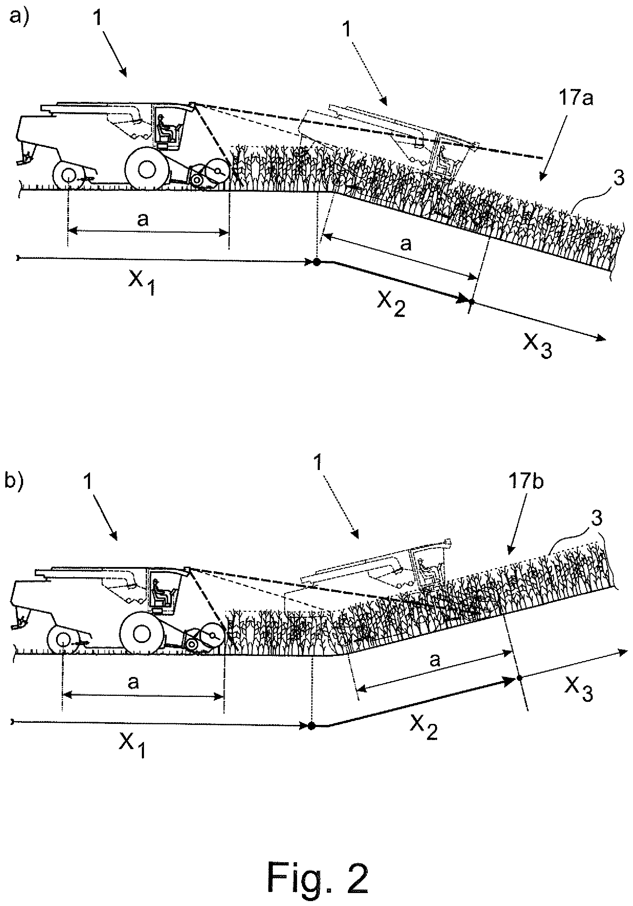

Ferner ist die landwirtschaftliche Arbeitsmaschine 1 mit einem Autokontursystem 11 zur Regelung des Abstands des Vorsatzgeräts 2 zum Boden 12 beim Durchfahren des Feldbestands 3 ausgestattet. Das Autokontursystem 11 kann Bestandteil eines Fahrerassistenzsystems 13 sein, das zur Ansteuerung der Arbeitsorgane 5 bis 10 dient. Das Autokontursystem 11 und gegebenenfalls auch das Fahrerassistenzsystem 13 weist hier und vorzugsweise jeweils einen Speicher 14 zum Hinterlegen von Daten sowie eine Rechenvorrichtung 15 zur Verarbeitung der in dem Speicher 14 hinterlegten Daten auf. Bei den Daten handelt es sich insbesondere um Messwerte zur Bestandshöhe oder -kontur und/oder um Messwerte zur Bodenkontur, wie im Weiteren noch erläutert wird. Die Funktionsweise eines Autokontursystems 11 ist hinlänglich bekannt und in der Beschreibungseinleitung allgemein beschrieben. Ein beispielhafter Aufbau eines solchen Autokontursystems 11 ist in der EP 1 374 661 B1 gezeigt, die auf die Anmelderin zurückgeht und deren Inhalt hiermit zum Gegenstand der vorliegenden Anmeldung gemacht wird. Grundsätzlich erlaubt das Autokontursystem 11 die Abtastung des Bodens 12 in Fahrtrichtung vor der landwirtschaftlichen Arbeitsmaschine 1 und/oder vertikal unterhalb des Vorsatzgeräts 2, womit sich Veränderungen der Bodenkontur automatisch erkennen lassen. Solche Veränderungen sind zum einen kleinere Bodenunebenheiten wie beispielsweise kleinere Erhebungen 16a oder Vertiefungen 16b in einem ansonsten im Wesentlichen ebenen Gelände (Fig. 1), die beispielsweise durch Fahrspuren oder Wildschäden verursacht sind, und zum anderen größere Änderungen der Geländekontur (topographische Änderungen) wie ein Abfall 17a des Geländes (Fig. 2a) oder ein Anstieg 17b des Geländes (Fig. 2b).

Erfindungsgemäß ist nun vorgesehen, dass das Autokontursystem 11 vorausschauend eine detektierte Bestandshöhenänderung des Feldbestands 3 berücksichtigt und basierend auf der detektierten Bestandshöhenänderung die Empfindlichkeit der Regelung des Autokontursystems 11 anpasst. Das Autokontursystem 11 detektiert also gegebenenfalls vorhandene Änderungen der Höhe des Feldbestands 3 und kann anhand dessen ermitteln, ob das Gelände im weiteren Verlauf in Fahrtrichtung vor der landwirtschaftlichen Arbeitsmaschine 1 insbesondere ansteigen wird, abfallen wird oder eben bleiben wird. Nur in dem Fall, dass eine detektierte Bestandshöhenänderung auf eine bevorstehende Änderung der Geländeneigung hindeutet, wird die Empfindlichkeit des Autokontursystems erhöht, um an der Stelle bzw. zu dem Zeitpunkt, an der bzw. dem sich die Geländeneigung ändert, das Vorsatzgerät 2 möglichst schnell an die Veränderung des Bodenprofils anpassen zu können. Wird dagegen keine Bestandshöhenänderung oder eine Bestandshöhenänderung in nur einem sehr kleinen Erstreckungsbereich detektiert, wird die Empfindlichkeit der Regelung des Autokontursystems 11 auf einen vergleichsweise niedrigen Wert eingestellt bzw. auf dem vergleichsweise niedrigen Wert, der insbesondere standardmäßig vorgegeben ist, belassen. Ist eine solche vergleichsweise geringe Empfindlichkeit eingestellt, reagiert das Autokontursystem 11 bei Höhenänderungen in der Bodenkontur vergleichsweise träge oder überhaupt nicht, da in diesem Fall Veränderungen der Bodenkontur auf lediglich kleinere Bodenunebenheiten 16a, 16b hindeuten.

Indem bei der vorschlagsgemäßen landwirtschaftlichen Arbeitsmaschine 1 das Autokontursystem 11 nur bei einer Änderung der Geländeneigung aufgrund der höheren Empfindlichkeit eine schnelle Regelung des Abstands des Vorsatzgeräts 2 zum Boden 12 durchführt und ansonsten, nämlich bei lediglich kleineren Bodenunebenheiten 16a, 16b, eher träge reagiert, können unerwünschte Schläge bzw. ein Schwingen des Vorsatzgeräts 2 vermieden werden. Dadurch kann der Fahrkomfort erhöht und das Schnittbild verbessert werden.

Die detektierte Bestandshöhenänderung wird hier und vorzugsweise mit einem vorgegebenen, im Speicher 14 abgelegten Sollwert für die Bestandshöhenänderung verglichen. Die detektierte Bestandshöhenänderung kann dabei auch eine mittlere Bestandshöhenänderung sein, die aus einer Mehrzahl von Messungen über eine vorgegebene Strecke in Fahrtrichtung ermittelt wird. Die einzelnen Messwerte können ebenfalls im Speicher 14 abgelegt werden. Wird beispielsweise eine Messung an mindestens drei in Fahrtrichtung voneinander beabstandeten Stellen durchgeführt und im Mittel keine Bestandshöhenänderung detektiert, kann darauf geschlossen werden, dass einzelne erhöhte Messwerte nur auf lokale, kleinere Bodenunebenheiten 16a, 16b in einem ansonsten ebenen Gelände hindeuten. In diesem Fall kann die Empfindlichkeit der Regelung des Autokontursystems 11 auf einem vergleichsweise geringen Wert eingestellt bleiben. Wird dagegen in Folge mehrmals hintereinander jeweils ein positiver Wert oder jeweils ein negativer Wert für die Bestandshöhenänderung ermittelt, was sich auch in einem entsprechend hohen positiven oder negativen Mittelwert für die Bestandshöhenänderung zeigt, deutet dies auf einen Anstieg oder einen Abfall des Geländes hin, was eine Erhöhung der Empfindlichkeit der Regelung des Autokontursystems 11, hier und vorzugsweise für eine vorgegebene Strecke und/oder Zeitspanne, erforderlich macht. Anschließend kann die Empfindlichkeit wieder verringert werden, insbesondere auf den vorhergehenden Wert. In den Figuren 2a und 2b ist beispielhaft ein erster Streckenabschnitt mit einer vergleichsweise gering eingestellten Regelungsempfindlichkeit mit X₁ gekennzeichnet, ein zweiter, darauf unmittelbar folgender Streckenabschnitt mit einer vergleichsweise hoch eingestellten Regelungsempfindlichkeit mit X₂ gekennzeichnet und ein dritter, darauf unmittelbar folgender Streckenabschnitt mit einer wieder vergleichsweise gering eingestellten Regelungsempfindlichkeit mit X₃ gekennzeichnet.

Die vorgegebene Strecke, über die die Empfindlichkeit der Regelung des Autokontursystems 11 auf dem erhöhten Wert bleiben soll, ist insbesondere so gewählt, dass die landwirtschaftliche Arbeitsmaschine 1 bereits zu Beginn der Änderung der Geländeneigung, gegebenenfalls auch schon kurz davor, auf einen erhöhten Wert eingestellt ist und solange erhöht bleibt, bis die landwirtschaftliche Arbeitsmaschine 1 die Stelle, an der sich die Geländeneigung ändert, zumindest größtenteils, vorzugsweise vollständig, passiert hat. Die Empfindlichkeit kann dann sofort im Anschluss oder zumindest kurz darauf wieder verringert werden.

Wie anhand der Figuren 2a und b erkennbar ist, entspricht die vorgegebene Strecke, über die die Empfindlichkeit erhöht bleibt, mindestens dem Abstand a zwischen einem Referenzpunkt P₁ am Vorsatzgerät 2 und einem davon in Längsrichtung bzw. Fahrtrichtung beabstandeten Referenzpunkt P₂ an der landwirtschaftlichen Arbeitsmaschine 1 im übrigen.

Der Referenzpunkt P₁ am Vorsatzgerät 2 ist hier und vorzugsweise eine Stelle an einem quer zur Längsrichtung verlaufenden Bauteil 18, 19 des Vorsatzgeräts 2, welche Stelle bzw. welches Bauteil 18, 19 beim Durchfahren des Feldbestands 3 mit dem Erntegut 4 zuerst in Kontakt kommt. Hier und vorzugsweise handelt es sich bei der Stelle um eine Stelle, insbesondere an der Vorderkante, eines Schneidorgans 18, beispielsweise eines Messerbalkens, oder einer Haspel 19 des Vorsatzgeräts 2 bzw. hier des Schneidwerks 6.

Der Referenzpunkt P₂ an der landwirtschaftlichen Arbeitsmaschine 1 im Übrigen ist hier und vorzugsweise eine Stelle an einem hinteren Bodeneingriffsmittel 20, hier einem hinteren Rad, eines Fahrwerks 21 der landwirtschaftlichen Arbeitsmaschine 1. Insbesondere ist die Stelle die auf die Längsrichtung bzw. Fahrtrichtung bezogene Mitte der Aufstandsfläche des Bodeneingriffsmittels 20. Der Begriff "Bodeneingriffsmittel" ist hier weit zu verstehen und umfasst neben einem Rad beispielsweise auch ein Raupenschiff. Grundsätzlich kann der Referenzpunkt P₂ auch an anderer Stelle vorgesehen sein, wobei dieser vorzugsweise bezogen auf die Fahrtrichtung von dem ersten Referenzpunkt P₁ beabstandet ist. Jedenfalls ist es bevorzugt, wenn der Referenzpunkt P₂ eine Stelle an einem Bauteil der landwirtschaftlichen Arbeitsmaschine ist, die beim Durchfahren des Feldbestands 3 mit dem Boden 12 in Kontakt kommt.

Hier und vorzugsweise wird die Empfindlichkeit der Regelung des Autokontursystems 11 nur zwischen zwei Werten eingestellt, nämlich einem ersten, niedrigeren Wert und einem zweiten, im Vergleich dazu höheren Wert. Grundsätzlich kann aber auch ein Autokontursystem vorgesehen sein, bei dem auch Zwischenwerte zwischen einem ersten, niedrigeren Wert und einem zweiten, höheren Wert eingestellt werden können.

Um nun eine Bestandshöhenänderung zu detektieren, weist die landwirtschaftliche Arbeitsmaschine 1 hier und vorzugsweise eine Detektionseinrichtung 22 auf. Die Detektionseinrichtung 22 umfasst hier beispielhaft eine Kamera 23, die beispielsweise auf einem Fahrerkabinendach 24 installiert ist und in Fahrtrichtung ausgerichtet ist. Zusätzlich oder alternativ zu einer Kamera 23 kann auch, um nur einige Beispiele zu nennen, ein Radarsensor, ein Infrarotsensor, ein Lasersensor (Lidar-Sensor) und/oder ein Ultraschallsensor vorgesehen sein. Auf diese Weise kann der Feldbestand 3 in Fahrtrichtung vor der landwirtschaftlichen Arbeitsmaschine 1 erfasst werden. Ein entsprechender Erfassungsbereich 25 ist in den Figuren 1 und 2 durch gestrichelte Linien dargestellt. Grundsätzlich können auch mehrere solcher Detektionseinrichtungen 22 vorgesehen sein, die insbesondere über die Arbeitsbreite der landwirtschaftlichen Arbeitsmaschine 1 oder des Vorsatzgeräts 2 verteilt angeordnet sind.

Die Detektionseinrichtung 22 ist hier und vorzugsweise konfiguriert, die Bestandshöhe, also die absolute Pflanzenhöhe, oder eine Bestands-Höhenkontur des Feldbestands 3 in Fahrtrichtung vor der landwirtschaftlichen Arbeitsmaschine 1 zu erkennen und basierend auf einem ermittelten Höhenunterschied in der Bestandshöhe oder in der Bestands-Höhenkontur eine Bestandshöhenänderung zu detektieren. Hier und vorzugsweise führt die Detektionseinrichtung 22 eine kontinuierliche Erfassung durch. Grundsätzlich ist es auch denkbar, dass eine Detektionseinrichtung eine diskontinuierliche, insbesondere regelmäßige Erfassung durchführt.

Bei der vorschlagsgemäßen landwirtschaftlichen Arbeitsmaschine 1 weist das Autokontursystem 11 ferner eine Bodenabtasteinrichtung 26 auf, die hier und vorzugsweise einen (hier nicht dargestellten) Tastbügel aufweist. Die Bodenabtasteinrichtung 26 ist am Vorsatzgerät 2 so angeordnet, dass sie den Boden 12 in Fahrtrichtung vor der landwirtschaftlichen Arbeitsmaschine 1 und/oder unterhalb des Vorsatzgeräts 2 abtasten kann. Ein Abtasten des Bodens 12 kann berührend, beispielsweise mittels eines Tastbügels, oder berührungsfrei, beispielsweise mittels eines optischen Systems, erfolgen. Grundsätzlich können auch mehrere solcher Bodenabtasteinrichtungen 26 vorgesehen sein, die insbesondere über die Arbeitsbreite der landwirtschaftlichen Arbeitsmaschine 1 oder des Vorsatzgeräts 2 verteilt angeordnet sind.

Bei einem durch die Abtastung ermittelten Höhenunterschied im Boden 12 regelt das Autokontursystem 11 dann den Abstand des Vorsatzgeräts 2 zum Boden 12 unter Berücksichtigung der eingestellten Empfindlichkeit. Hier und vorzugsweise regelt das Autokontursystem 11 mit der jeweils eingestellten Empfindlichkeit sowohl die Höhen- als auch die Querlage des Vorsatzgeräts 2.

### Bezugszeichenliste

- 1: Landwirtschaftliche Arbeitsmaschine
- 2: Vorsatzgerät
- 3: Feldbestand
- 4: Erntegut
- 5: Fahrantrieb
- 6: Schneidwerk
- 7: Dreschwerk
- 8: Abscheidevorrichtung
- 9: Reinigungsvorrichtung
- 10: Verteilvorrichtung
- 11: Autokontursystem
- 12: Boden
- 13: Fahrerassistenzsystem
- 14: Speicher
- 15: Rechenvorrichtung
- 16a,b: Bodenunebenheiten
- 17a: Geländeabfall
- 17b: Geländeanstieg
- 18: Schneidorgan
- 19: Haspel
- 20: Bodeneingriffsmittel
- 21: Fahrwerk
- 22: Detektionseinrichtung
- 23: Kamera
- 24: Fahrerkabinendach
- 25: Erfassungsbereich
- 26: Bodenabtasteinrichtung
- P₁: erster Referenzpunkt
- P₂: zweiter Referenzpunkt
- a: Abstand zwischen Referenzpunkten

## Patentansprüche

1. Landwirtschaftliche Arbeitsmaschine, insbesondere Erntemaschine, mit einem Vorsatzgerät (2) zur Durchführung oder Unterstützung landwirtschaftlicher Arbeit in einem Feldbestand (3) mit Erntegut (4), mit einem Autokontursystem (11) zur Regelung des Abstands des Vorsatzgeräts (2) zum Boden (12) beim Durchfahren des Feldbestands (3),
**dadurch gekennzeichnet,**
**dass** die landwirtschaftliche Arbeitsmaschine (1) eine Detektionseinrichtung (22) aufweist, die den Feldbestand (3) in Fahrtrichtung vor der landwirtschaftlichen Arbeitsmaschine (1) erfasst,
wobei die Detektionseinrichtung (22) die Bestandshöhe oder eine Bestands-Höhenkontur des Feldbestands (3) in Fahrtrichtung vor der landwirtschaftlichen Arbeitsmaschine (1) erkennt und basierend auf einem ermittelten Höhenunterschied in der Bestandshöhe oder Bestandshöhenkontur eine Bestandshöhenänderung detektiert,
wobei das Autokontursystem (11) vorausschauend die detektierte Bestandshöhenänderung des Feldbestands (3) berücksichtigt und basierend auf der detektierten Bestandshöhenänderung die Empfindlichkeit der Regelung des Autokontursystems (11) anpasst.

2. Landwirtschaftliche Arbeitsmaschine nach Anspruch 1, **dadurch gekennzeichnet, dass** die detektierte Bestandshöhenänderung mit einem vorgegebenen Sollwert für die Bestandshöhenänderung verglichen wird.

3. Landwirtschaftliche Arbeitsmaschine nach Anspruch 1 oder 2, **dadurch gekennzeichnet, dass** die detektierte Bestandshöhenänderung eine mittlere Bestandshöhenänderung ist, die über eine vorgegebene Strecke ermittelt wird.

4. Landwirtschaftliche Arbeitsmaschine nach einem der vorhergehenden Ansprüche, **dadurch gekennzeichnet, dass** die Empfindlichkeit der Regelung des Autokontursystems (11) erhöht wird, wenn der vorgegebene Sollwert für die Bestandshöhenänderung überschritten wird.

5. Landwirtschaftliche Arbeitsmaschine nach einem der vorhergehenden Ansprüche, **dadurch gekennzeichnet, dass** die Empfindlichkeit der Regelung des Autokontursystems (11) bei Überschreiten des vorgegebenen Sollwerts für die Bestandshöhenänderung für eine vorgegebene Strecke (X₂) und/oder Zeitspanne erhöht wird und anschließend wieder, insbesondere auf die Empfindlichkeit vor der Erhöhung, verringert wird.

6. Landwirtschaftliche Arbeitsmaschine nach Anspruch 5, **dadurch gekennzeichnet, dass** die vorgegebene Strecke (X₂), über die die Empfindlichkeit der Regelung des Autokontursystems (11) erhöht bleibt, mindestens dem Abstand (a) zwischen einem Referenzpunkt (P₁) am Vorsatzgerät (2) und einem davon in Längsrichtung beabstandeten Referenzpunkt (P₂) an der landwirtschaftlichen Arbeitsmaschine (1) im Übrigen entspricht.

7. Landwirtschaftliche Arbeitsmaschine nach Anspruch 6, **dadurch gekennzeichnet, dass** der Referenzpunkt (P₁) am Vorsatzgerät (2)
- eine Stelle an einem quer zur Längsrichtung verlaufenden Bauteil (18, 19) des Vorsatzgeräts (2) ist, welche Stelle oder welches Bauteil (18, 19) beim Durchfahren des Feldbestands (3) mit dem Erntegut (4) zuerst in Kontakt kommt, und/oder
- eine Stelle an einem Schneidorgan (18) oder einer Haspel (19) des Vorsatzgeräts (2), insbesondere an der Vorderkante des Schneidorgans (18) oder der Haspel (19), ist.

8. Landwirtschaftliche Arbeitsmaschine nach Anspruch 6 oder 7, **dadurch gekennzeichnet, dass** der Referenzpunkt (P₂) an der landwirtschaftlichen Arbeitsmaschine (1) im Übrigen
- eine Stelle an einem Bauteil (20) der landwirtschaftlichen Arbeitsmaschine (1) im Übrigen ist, die beim Durchfahren des Feldbestands (3) mit dem Boden (12) in Kontakt kommt, und/oder
- eine Stelle an einem hinteren Bodeneingriffsmittel (20) eines Fahrwerks (21) der landwirtschaftlichen Arbeitsmaschine (1), insbesondere die auf die Längsrichtung bezogene Mitte der Aufstandsfläche des Bodeneingriffsmittels (20), ist.

9. Landwirtschaftliche Arbeitsmaschine nach einem der vorhergehenden Ansprüche, **dadurch gekennzeichnet, dass** die Empfindlichkeit der Regelung des Autokontursystems (11) zumindest auf einen ersten Wert und einen höheren zweiten Wert eingestellt werden kann, wobei insbesondere auch mindestens ein Zwischenwert zwischen dem ersten Wert und dem zweiten Wert eingestellt werden kann.

10. Landwirtschaftliche Arbeitsmaschine nach einem der vorhergehenden Ansprüche, **dadurch gekennzeichnet, dass** die Detektionseinrichtung (22) eine Kamera (23), einen Radarsensor, einen Infrarotsensor, einen Lasersensor und/oder einen Ultraschallsensor umfasst.

11. Landwirtschaftliche Arbeitsmaschine nach einem der vorhergehenden Ansprüche, **dadurch gekennzeichnet, dass** die Detektionseinrichtung (22) eine kontinuierliche oder eine diskontinuierliche, insbesondere regelmäßige, Erfassung des Feldbestands (3) durchführt.

12. Landwirtschaftliche Arbeitsmaschine nach einem der vorhergehenden Ansprüche, **dadurch gekennzeichnet, dass** das Autokontursystem (11) eine Bodenabtasteinrichtung (26), insbesondere mit einem Tastbügel, aufweist, die am Vorsatzgerät (2) angeordnet ist und den Boden (12) in Fahrtrichtung vor der landwirtschaftlichen Arbeitsmaschine (1) und/oder unter dem Vorsatzgerät (2) berührend und/oder berührungslos abtastet, wobei das Autokontursystem (11) bei einem durch die Abtastung ermittelten Höhenunterschied im Boden (12) den Abstand des Vorsatzgeräts (2) zum Boden (12) unter Berücksichtigung der eingestellten Empfindlichkeit der Regelung des Autokontursystems (11) regelt.

13. Landwirtschaftliche Arbeitsmaschine nach einem der vorhergehenden Ansprüche, **dadurch gekennzeichnet, dass** das Autokontursystem (11) mit der jeweils eingestellten Empfindlichkeit die Höhenlage und/oder die Querlage des Vorsatzgeräts (2) relativ zum Boden (12) regelt.

## Claims

1. An agricultural working machine, in particular a harvesting machine, with a front attachment (2) for carrying out or supporting agricultural work in a field crop (3) with material for harvesting (4), with an autocontour system (11) for regulating the distance of the front attachment (2) to the ground (12) when driving through the field crop (3),
**characterized in that**
the agricultural working machine (1) has a detection device (22) which detects the field crop (3) in front of the agricultural working machine (1) in the direction of travel,
wherein the detection device (22) measures the crop height or a crop height contour of the field crop (3) in front of the agricultural working machine (1) in the direction of travel and detects a variation in the crop height based on a determined height difference in the crop height or the crop height contour, wherein the autocontour system (11) proactively takes into account the detected crop height variation in the field crop (3) and adapts the sensitivity of the regulation of the autocontour system (11) based on the detected crop height variation.

2. The agricultural working machine according to claim 1, **characterized in that** the detected crop height variation is compared with a predetermined nominal value for the crop height variation.

3. The agricultural working machine according to claim 1 or claim 2, **characterized in that** the detected crop height variation is a mean crop height variation which is determined over a predetermined distance.

4. The agricultural working machine according to one of the preceding claims, **characterized in that** the sensitivity of the regulation of the autocontour system (11) is increased when the predetermined nominal value for the crop height variation is exceeded.

5. The agricultural working machine according to one of the preceding claims, **characterized in that** the sensitivity of the regulation of the autocontour system (11) is increased upon exceeding the predetermined nominal value for the crop height variation for a predetermined distance (X₂) and/or time interval and then is reduced again, in particular to the sensitivity prior to the increase.

6. The agricultural working machine according to claim 5, **characterized in that** the predetermined distance (X₂) over which the sensitivity of the regulation of the autocontour system (11) remains increased corresponds to at least the distance (a) between a reference point (P₁) on the front attachment (2) and a reference point (P₂) separated from it in the longitudinal direction on the remainder of the agricultural working machine (1).

7. The agricultural working machine according to claim 6, **characterized in that** the reference point (P₁) on the front attachment (2)
- is a position on a component (18, 19) of the front attachment (2) which runs transversely to the longitudinal direction, that position or that component (18, 19) being the first to come into contact with the material for harvesting (4) when driving through the field crop (3), and/or
- is a position on a cutting unit (18) or a reel (19) of the front attachment (2), in particular on the front edge of the cutting unit (18) or of the reel (19).

8. The agricultural working machine according to claim 6 or claim 7, **characterized in that** the reference point (P₂) on the remainder of the agricultural working machine (1)
- is a position on a component (20) of the remainder of the agricultural working machine (1) which comes into contact with the ground (12) when driving through the field crop (3), and/or
- is a position on a rear ground engaging means (20) of a chassis (21) of the agricultural working machine (1), in particular the centre of the footprint of the ground engaging means (20) with respect to the longitudinal direction.

9. The agricultural working machine according to one of the preceding claims, **characterized in that** the sensitivity of the regulation of the autocontour system (11) can be set to at least a first value and a higher second value, wherein in particular, at least one intermediate value between the first value and the second value can also be set.

10. The agricultural working machine according to one of the preceding claims, **characterized in that** the detection device (22) comprises a camera (23), a radar sensor, an infrared sensor, a laser sensor and/or an ultrasound sensor.

11. The agricultural working machine according to one of the preceding claims, **characterized in that** the detection device (22) carries out a continuous or discontinuous, in particular regular, detection of the field crop (3).

12. The agricultural working machine according to one of the preceding claims, **characterized in that** the autocontour system (11) has a ground scanning device (26), in particular with a sensor arm which is disposed on the front attachment (2) and scans the ground (12) in front of the agricultural working machine (1) in the direction of travel and/or scans under the front attachment (2) in a contacting and/or contact-free manner, wherein, when a height difference in the ground (12) is determined by the scan, the autocontour system (11) regulates the distance of the front attachment (2) to the ground (12) taking into account the set sensitivity of the regulation of the autocontour system (11).

13. The agricultural working machine according to one of the preceding claims, **characterized in that** the autocontour system (11) with the respectively set sensitivity regulates the height position and/or the transverse position of the front attachment (2) relative to the ground (12).

## Revendications

1. Machine de travail agricole, en particulier machine de récolte, comprenant un outil frontal (2) pour réaliser ou assister un travail agricole dans une culture en champ (3) avec du produit récolté (4), comprenant un système Auto Contour (11) pour réguler la distance de l'outil frontal (2) par rapport au sol (12) lors du parcours d'une culture en champ (3), **caractérisée en ce que** la machine de travail agricole (1) comporte un équipement de détection (22) qui analyse la culture en champ (3) dans le sens de marche devant la machine de travail agricole (1), l'équipement de détection (22) décelant la hauteur de culture ou un contour de hauteur de culture de la culture en champ (3) dans le sens de marche devant la machine de travail agricole (1) et, sur la base d'une différence de hauteur déterminée dans la hauteur de culture ou le contour de hauteur de culture, détecte une variation de hauteur de culture, le système Auto Contour (11) prenant en compte par anticipation la variation de hauteur de culture détectée de la culture en champ (3) et, sur la base de la variation de hauteur de culture détectée, adaptant la sensibilité de la régulation du système Auto Contour (11).

2. Machine de travail agricole selon la revendication 1, **caractérisée en ce que** la variation de hauteur de culture détectée est comparée à une valeur de consigne prescrite pour la variation de hauteur de culture.

3. Machine de travail agricole selon la revendication 1 ou 2, **caractérisée en ce que** la variation de hauteur de culture détectée est une variation de hauteur de culture moyenne qui est déterminée sur un trajet prescrit.

4. Machine de travail agricole selon une des revendications précédentes, **caractérisée en ce que** la sensibilité de la régulation du système Auto Contour (11) est augmentée lorsque la valeur de consigne prescrite pour la variation de hauteur de culture est surpassée.

5. Machine de travail agricole selon une des revendications précédentes, **caractérisée en ce que** la sensibilité de la régulation du système Auto Contour (11) est augmentée lors du surpassement de la valeur de consigne prescrite pour la variation de hauteur de culture pour un trajet (X₂) et/ou un intervalle de temps prescrits et est ensuite à nouveau réduite, en particulier à la sensibilité avant l'augmentation.

6. Machine de travail agricole selon la revendication 5, **caractérisée en ce que** le trajet prescrit (X₂) pendant lequel la sensibilité de la régulation du système Auto Contour (11) reste augmentée correspond par ailleurs au moins à la distance (a) entre un point de référence (P₁) sur l'outil frontal (2) et un point de référence (P₂), distant de celui-ci dans la direction longitudinale, sur la machine de travail agricole (1).

7. Machine de travail agricole selon la revendication 6, **caractérisée en ce que** le point de référence (P₁) sur l'outil frontal (2)
- est un endroit sur un composant (18, 19) de l'outil frontal (2) qui s'étend transversalement à la direction longitudinale, lequel endroit ou lequel composant (18, 19) venant le premier en contact avec le produit récolté (4) lors du parcours de la culture en champ (3), et/ou
- est un endroit sur un organe de coupe (18) ou sur un rabatteur (19) de l'outil frontal (2), en particulier sur le bord avant de l'organe de coupe (18) ou du rabatteur (19).

8. Machine de travail agricole selon la revendication 6 ou 7, **caractérisée en ce que**, par ailleurs, le point de référence (P₂) sur la machine de travail agricole (1)
- est un endroit sur un composant (20) de la machine de travail agricole (1) qui vient en contact avec le sol (12) lors du parcours de la culture en champ (3), et/ou
- est un endroit sur un moyen de prise au sol arrière (20) d'un train de roulement (21) de la machine de travail agricole (1), en particulier le centre, par rapport à la direction longitudinale, de la surface de contact au sol du moyen de prise au sol (20).

9. Machine de travail agricole selon une des revendications précédentes, **caractérisée en ce que** la sensibilité de la régulation du système Auto Contour (11) peut être réglée au moins sur une première valeur et une seconde valeur supérieure, en particulier au moins une valeur intermédiaire pouvant également être instaurée entre la première valeur et la seconde valeur.

10. Machine de travail agricole selon une des revendications précédentes, **caractérisée en ce que** l'équipement de détection (22) inclut une caméra (23), un capteur radar, un capteur infrarouge, un capteur laser et/ou un capteur à ultrasons.

11. Machine de travail agricole selon une des revendications précédentes, **caractérisée en ce que** l'équipement de détection (22) effectue une analyse continue ou discontinue, en particulier régulière, de la culture en champ (3).

12. Machine de travail agricole selon une des revendications précédentes, **caractérisée en ce que** le système Auto Contour (11) comporte un équipement de palpation de sol (26), en particulier avec un étrier palpeur, qui est disposé sur l'outil frontal (2) et palpe le sol (12) avec contact et/ou sans contact dans le sens de marche devant la machine de travail agricole (1) et/ou sous l'outil frontal (2), le système Auto Contour (11) régulant la distance de l'outil frontal (2) par rapport au sol (12) en tenant compte de la sensibilité instaurée de la régulation du système Auto Contour (11) en cas de différence de hauteur dans le sol (12) déterminée par la palpation.

13. Machine de travail agricole selon une des revendications précédentes, **caractérisée en ce que** le système Auto Contour (11) régule, avec la sensibilité respectivement instaurée, la position en hauteur et/ou la position transversale de l'outil frontal (2) par rapport au sol (12).
